# EUROPEAN PATENT APPLICATION

(11) **EP 2 942 519 A1**
(43) Date of publication of application: **11.11.2015**
(21) Application number: 14167559.5
(22) Date of filing: 08.05.2014
(51) Int. Cl.: F03B 13/00, F03B 17/06, F03B 7/00, E03F 1/00

(54) **Sewer plant for blackwater**

(71) Applicant: OM.E.G. S.r.l., 20090 Cesano Boscone (Milan) (IT)
(72) Inventor: Torri, Gianfranco, 20090 Cesano Boscone (Milan) (IT); Rustico, Graziano Francesco, 20090 Cescano Boscone (IT)
(74) Representative: Lunati & Mazzoni S.r.L.

(57) **Abstract**

A sewer plant (1) for blackwater (1 a) is provided comprising a collection apparatus (2) of sewage (1 a) from a building and defining an output cross-section (2a) of the sewage (1 a) from said collection apparatus (2); a connection (3) suitable to convey the sewage (1 a) in output from the collection apparatus (2) into a drainage network and defining an input cross-section (3a) of the sewage (1a) in the connection (3) placed at a different height from the output cross-section (2a) so as to receive the sewage (1 a) by gravity; a water wheel (5) defining a rotation axis (5a) and a moment of inertia and comprising radial chambers (5b) suitable to face the cross-sections (2a, 3a) so that when a radial chamber (5b) faces the output cross-section (3a) the sewage (1 a) enters the radial chamber (5b) defining a rotational torque for the water wheel (5) and so that, when such rotational torque is greater than the moment of inertia, the water wheel (5) undergoes a rotation allowing the radial chamber (5b) to face the input cross-section (3a) and, thus the sewage (1 a) in the radial chamber (5b) to enter the connection (3); and an electric generator (6) suitable to convert the rotation of the water wheel (5) into electrical energy.

## Description

The present invention relates to a sewer plant for blackwater of the type specified in the preamble of the first claim.

In particular, the invention relates to a system suitable for collecting sewage, namely the wastewater and sewage of a building produced by the WC, washbasin, bath, shower, household appliances or other similar utilities, and, then, introduce it into a sewer system, commonly known as sewer.

As is known, domestic wastewaters comprise all the fluids from residential areas and services and, therefore, deriving mainly from the human metabolism and from household or similar activities.

To collect such waters, the known drainage systems provide a system of pipes which collects and withdraws the sewage from the individual utilities (WC, washbasin, bath, shower, appliances); a collection duct into which such pipes converge and which conducts the sewage to the sewage system.

Between the collection duct and the sewer a drain trap is provided.

The drain trap consists of a construction in reinforced concrete cast in situ or prefabricated and housing an interceptor trap.

The trap prevents the fumes or gases of the sewers from returning into the buildings and reduces any foreign bodies such as sanitary towels, shower caps or the like into fragments, which being of a large size would otherwise enter the sewer system blocking it.

Lastly, the drainage systems for sewage may provide one or more pumps designed to move the fluid inside the pipes and drainage duct thus ensuring its passage into the sewer system.

The prior art described above has several significant drawbacks.

A first important drawback is represented by the fact that the drainage systems have particularly high construction and maintenance costs.

This disadvantage is increased by the fact that they move large volumes of fluids which are not utilisable for the production, for example of energy, since characterized by a highly variable flow rate.

In fact, the flow rate of a drainage system can oscillate between a practically zero value, in the case in which none of the utilities are in use, and a very high value in the case in which all the utilities are in use.

In this situation the technical purpose of the present invention is to devise a sewer plant for blackwater able to substantially overcome the inconveniences mentioned above.

In the context of said technical purpose one important aim of the invention is to obtain a sewer plant for blackwater which makes it possible to reduce maintenance and production costs.

Another important aim of the invention is to obtain a drainage system which, despite a very variable flow rate, is able to take advantage of the sewage transported by it.

The technical purpose and specified aims are achieved by a sewer plant for blackwater as claimed in the appended Claim 1.

Preferred embodiments are described in the dependent claims.

The characteristics and advantages of the invention are clearly evident from the following detailed description of a preferred embodiment thereof, with reference to the accompanying drawings, in which:
**Fig. 1** shows a sewer plant for blackwater according to the invention;
**Fig**. **2** shows the drainage system in a moment of operation different from that of Fig 1;
**Fig. 3** shows a subsequent moment of the functioning of the sewer plant for blackwater according to the invention different from those represented in Figs. 1 and 2;
**Fig. 4** shows an assembly of the sewer plant for blackwater; and
**Fig**. **5** is a further embodiment of the assembly in Fig. 4.

With reference to said Drawings, a sewer plant for blackwater according to the invention is globally denoted by reference numeral 1.

It is suitable to collect the waste water and/or sewage, hereinafter univocally referred to as sewage **1a** produced by WCs, washbasins, baths, showers, household appliances or other utilities of a building; and to conduct and drain the sewage into a drainage network such as a sewer, a cesspool or septic tank.

The drainage system 1 is almost entirely underground and includes, in brief, a collection apparatus **2** for the sewage 1 a produced by the various utilities of a building and defining an output cross-section **2a** of the sewage 1a from the collection apparatus 2; a connection **3** suitable to convey the sewage 1a in output from the collection apparatus 2 into a drainage network and defining an input cross-section 3a of the sewage 1 a into the connection 3; and a device for generating electricity suitable to use the flow of sewage 1 a to produce electricity; and a well **4,** preferably made of reinforced concrete, defining an internal housing at least for the device generating electricity.

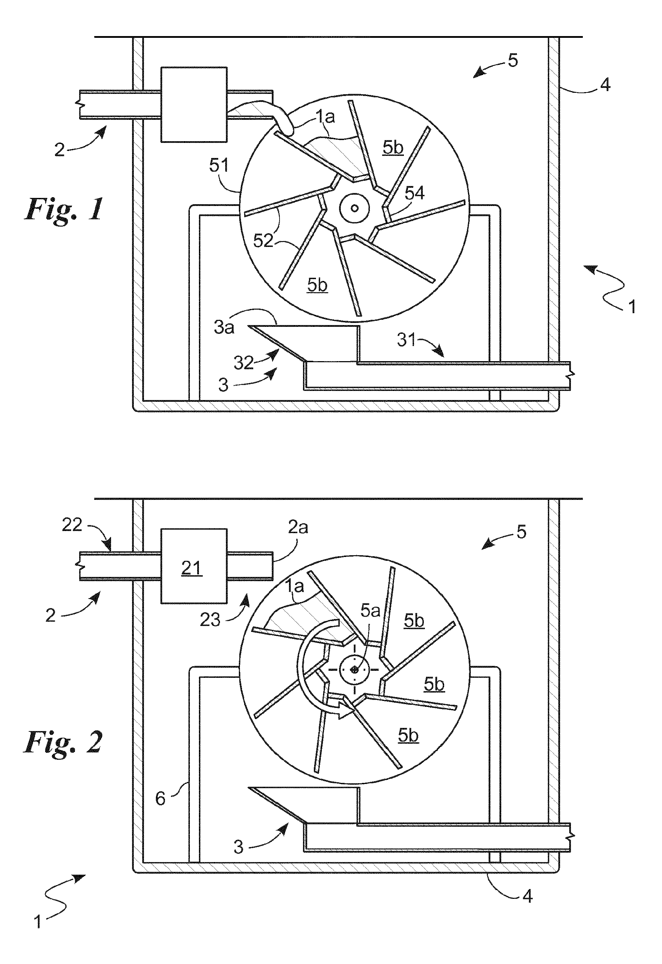

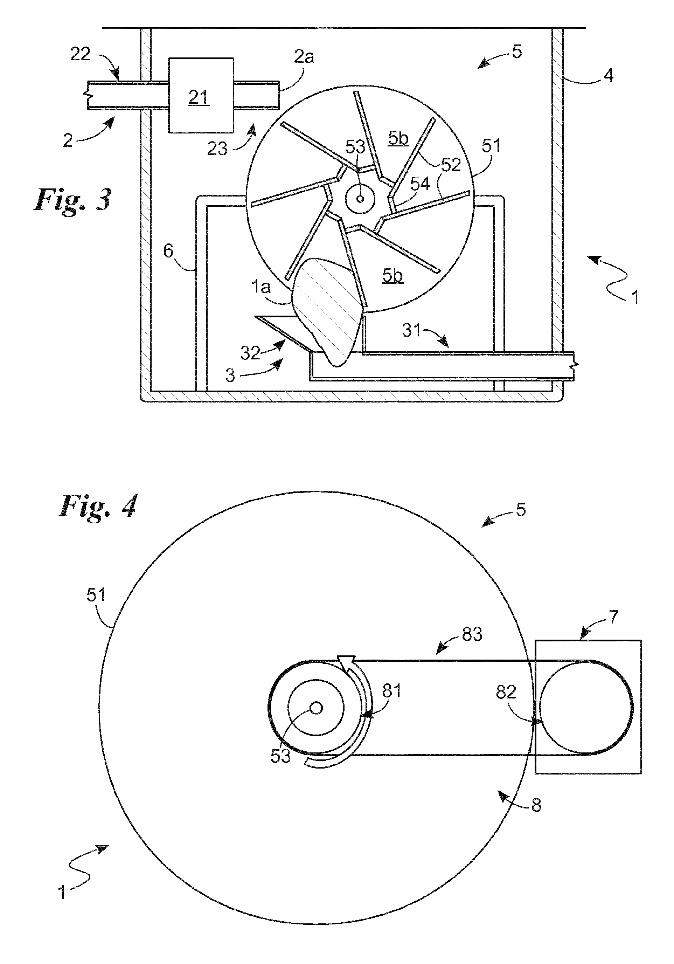

The collection apparatus 2 (Figs. 2 and 3) comprises an interceptor trap **21** for the sewage 1 a housed in the well 4; an input duct **22** suitable to withdraw the sewage 1a from the building and take it to the interceptor trap 21; and a drainage duct **23** suitable to take away the sewage 1 a from the trap 21 and defining an output cross-section 2a.

The connection 3 (Figs. 1 and 3) comprises an output duct **31** suitable to discharge the sewage 1 a into the drainage network and a funnel **32** defining the input cross-section 3a and suitable to collect the incoming sewage 1 a in the connection 3 conveying it into the output duct 31.

Advantageously, the input cross-section 3a is at a different height from that of the output 2a so that the sewage 1 a passes practically by gravity from the apparatus 2 and, in particular, from the drainage duct 23 into the connection 3.

The electricity production device, suitably housed in the well 4, includes a water wheel 5 able to withdraw the sewage 1 a in output from the drainage duct 23 and to discharge it into the connection 3 transforming, at least partially, the energy of the sewage 1 a into mechanical energy; a support structure **6** suitable to constrain the water wheel 5 to the well 4; and an electric generator **7** suitable to transform the mechanical energy of the water wheel 5 into electrical energy.

The waterwheel 5 defines a rotation axis **5a** preferably horizontal and parallel to the cross-sections 2a and 3a; and a moment of inertia substantially representing the opposition of said water wheel 5 to varying its state of rotational motion around the rotation axis 5a.

The water wheel 5 comprises radial chambers **5b** suitable to face the cross-sections 2a and 3a so that, as described in detail below, when a radial chamber 5b faces the output cross-section 2a, the sewage 1a enters the chamber 5b defining a rotational torque for the water wheel 5 which, when the wheel 5 is subjected to a rotational torque greater than the moment of inertia, undergoes a rotation allowing the radial chamber 5b to face the input cross-section 3a and, thus, the sewage 1 a present in the radial chamber 5b to enter the connection 3 through the funnel 32. The waterwheel 5 includes two base plates **51** parallel to each other and mutually distanced along the axis of rotation 5a so as to define an inner volume closed at the bases and open at the sides; arms **52** integrally constrained, for example by bolting, between the base plates 51 so as to divide the inner volume into radial chambers 5b almost equal to each other; at least one shaft **53** integral with at least one plate 51; and at least one bearing or other similar element suitable to hinge, preferably idly, the shaft 53 and, thus the water wheel 5 to the support structure 6. In particular, each radial chamber 5b is axially defined by the base plates 51 and, radially, by two adjacent arms 52 shaped so that each chamber 5b has, along its radial direction 5c, a tapered cross-section of minimum extension proximal to the axis 5a so as to maximize the distance between the barycentre of the mass of sewage 1 a and the axis 5a.

To such purpose, each arm 52 is identifiable in a profile extending in a divergent direction to the radial direction 5c of adjoining chambers 5b and is inclined in relation to the arms 52 adjacent thereto so as to define said tapered section for the radial chambers 5b. Preferably, an arm 52 extends in a divergent direction to the radial direction 5c of an angle substantially less than 30°.

Moreover, to further increase the distance of the rotation axis 5a from the barycentre of the mass of sewage 1 a in one chamber 5b, the waterwheel 5 comprises plates **54** each of which is subtended between two adjacent arms 51 and transversal to the radial direction 5c of a chamber 5b so as to define a bottom suitable to prevent the sewage 1 a from being close to the axis 5a.

As shown in Fig. 4, the system 1 has, suitably connected to the water wheel 5 and, in particular, to the shaft 53, the electric generator **7** and a transmission member **8** suitable to regulate the transmission ratio of motion between the water wheel 5 and generator 7.

The generator 7 is a rotary generator suitable to convert the rotation of the shaft 53 into electric current and the transmission member 8 is suitable to define a transmission ratio between the rotation of the shaft 53 and the rotation of the rotor of the generator 7, adjustable in advance according to the flow of sewage 1 a.

In this case, the transmission member 8 (Fig. 4) comprises a drive wheel **81,** suitably toothed, integral with the shaft 53, a driven wheel **82,** suitably toothed, integral with the generator 7 and a belt **83** suitable to transmit the movement between the wheels 81 and 82.

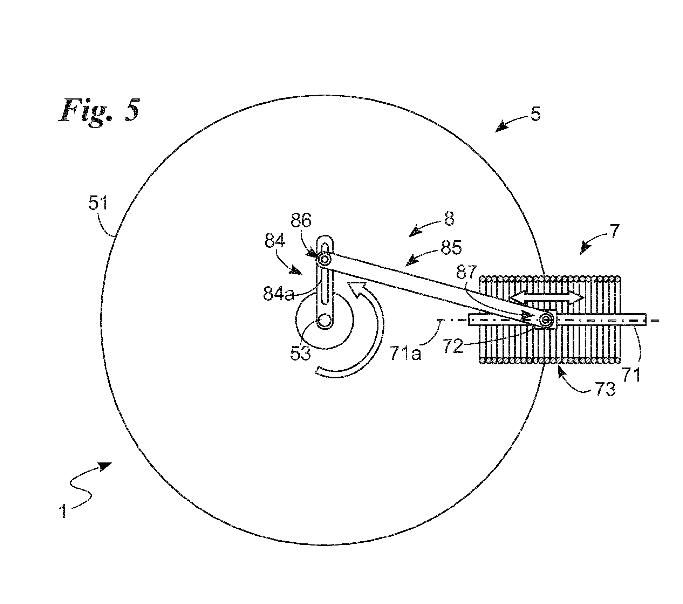

Alternatively, the electric generator 7 (Fig. 5) is a linear generator, preferably with permanent magnets, suitable to convert an oscillating translatory movement into electrical energy. It therefore comprises a guide **71** defining a sliding axis **7a;** a slider **72** suitable to slide along the guide 71 performing an oscillating translatory movement and preferably comprising at least one permanent magnet; and at least one conductor winding **73** in which the slider 71 translates, generating electricity by induction.

In this case, the transmission member 8 is identifiable in a rotary thrust crank and, in particular, in a crank-connecting rod mechanism capable of transforming the rotary movement of the shaft 53 into a reciprocating rectilinear movement of the slider 72.

It includes a crank **84** integral with the shaft 53; a connecting rod **85** connecting the crank 84 to the slider 72; a first hinge **86** between the crank 84 and connecting rod 85 and a second hinge **87** between the crank 83 and slider 72.

In particular, the crank 84 has a slot **84a** of the connecting rod 85 having a radial extension in relation to the shaft 53.

The first hinge 86 comprises a rotation pin for the connecting rod 85 suitable to slide in the slot 84a by varying the rotation radius of the connecting rod 85 in relation to the shaft 53; and attachment means suitable to lock the pin in a certain position along the slot 84a so as to set the rotation radius of the connecting rod 85. The functioning of a sewer plant for blackwater 1 a, described above in a structural sense, is as follows.

In particular, the functioning of the innovative drainage system 1 described above makes it possible to identify an innovative drainage procedure for sewage 1 a. The drainage method involves, initially, an adjustment step of the transmission ratio of the transmission member 8.

In this step, the first hinge 86 is made to slide along the slot 84a so as to adjust, depending on the estimated flow of sewage 1a of the system 1, the rotation radius of the crank 85 in relation to the shaft 53 and, thus, the water wheel 5.

Once the adjustment step is completed the method provides for a drainage step (Fig. 1) in which the sewage 1 a travelling along the drainage apparatus 2, is removed from the building; a filling step in which the drainage 1 a exits through the output cross-section 2a, from the drainage apparatus 2 and begins to fill at least one radial chamber 5b facing the cross-section 2a; a rotation step (Fig. 2) in which the weight of the sewage 1 a in the radial chamber 5b generates a rotational torque greater than the moment of inertia causing rotation of the wheel 5; a falling step (Fig. 3) in which, when the rotation of the wheel 5 faces the radial chamber 5b at the input cross-section 3a, the sewage 1 a under the pressure of its weight, comes out of the chamber 5b and falls into the connection 3 through the input cross-section 3a; and a release phase in which the connection 3 evacuates the sewage 1 a from the system 1 into a drainage network.

It should be noted how in the filling step, the sewage 1 a, as it accumulates in a radial chamber 5b, exerts on the hydraulic wheel 5 an increasingly greater rotational torque due to the increase of the mass of sewage 1 a and to the fact that the accumulation of sewage 1 a in the first chamber 5b, thanks to the tapered shape of the chambers 5b, moves the barycentre of the sewage 1 a away from the rotation axis 5a.

When the rotational torque exceeds the moment of inertia, the filling step is completed and the rotation step begins in which the rotational torque controls the rotation of the water wheel.

Such rotation permits both the radial chamber 5b just filled to be moved away from the output cross-section 2a and to face the input cross-section 3a where it drains the sewage 1 a and to face a second radial chamber 5b at the output cross-section 2a permitting a new filling step.

Practically simultaneously to the rotation step, an electricity production step (Fig. 4) begins in which the rotation movement of the water wheel 5, thanks to the transmission member 8, reaches the electric generator 7 which uses it to produce electrical current.

The invention achieves some important advantages.

A first important advantage is represented by the fact that both the innovative drainage system 1 and the drainage method achieved by it produce electricity and, therefore, reduce the maintenance costs of the system itself.

One important advantage is given by the shape of the radial chambers 5b which by presenting a tapered section of minimum extension next to the rotation axis 5a, allow the mass of sewage 1 a contained in a chamber 5b to have a barycentre away from the axis 5a and, thus, suitable to define a maximum extension arm for the weight force.

Another advantage is given by the possibility of adapting the drainage system 1 for sewage 1a to any building irrespective of its production of sewage 1a.

This aspect has been achieved thanks to the fact that the rotation of the water wheel occurs only when, in a radial chamber 5b, it has a content of sewage 1 a such as to generate a rotational torque greater than the moment of inertia of the wheel 5.

This advantage is also given by the presence of the transmission member which makes it possible to adjust the transmission ratio between the wheel 5 and generator 6 depending on the estimated flow of sewage 1 a of the drainage system 1, and thus of the volume of sewage 1a produced by the building.

In addition, by equipping the system with an electronic adjustment group of the voltage and current it is possible to use the energy produced to charge batteries or, with an inverter, to obtain a voltage 230-400 V for stand-alone use or grid supply.

Modifications may be made to the invention described herein without departing from the scope of the inventive concept. All the elements as described and claimed herein may be replaced with equivalent elements and the scope of the invention includes all other details, materials, shapes and dimensions.

## Claims

1. Drainage system (1) for sewage (1 a) comprising:
- a collection apparatus (2) of said sewage (1 a) of a building defining an output cross-section (2a) of said sewage (1a) from the collection apparatus (2);
- a connection (3) suitable to convey said sewage (1 a) in output from said collection apparatus (2) into a drainage network and defining an input cross-section (3a) of said sewage (1 a) into said connection (3);
**characterised in that**
- said input cross-section (3a) is at a different height to said output cross-section (2a) so as to receive said sewage (1 a) substantially by gravity;
- and **in that** said drainage system (1) comprises
- a water wheel (5) defining a rotation axis (5a) and a moment of inertia and comprising radial chambers (5b) suitable to face said cross-sections (2a, 3a) so that when one of said radial chambers (5b) faces said output section (3a) said sewage (1 a) enters said radial chamber (5b) defining a rotational torque for said water wheel (5) and in which, when said rotational torque is greater than said moment of inertia, said water wheel (5) undergoes a rotation allowing said radial chamber (5b) to face said input cross-section (3a) and, thus, said sewage (1 a) in said radial chamber (5b) to enter said connection (3);
- an electric generator (6) suitable to convert said rotation of said water wheel (5) into electrical energy.

2. Drainage system (1) for sewage (1 a) according to claim 1, wherein each of said radial chambers (5b) has, in its radial direction (5c), a tapered section of minimum extension proximal to said rotation axis (5a).

3. Drainage system (1) for sewage (1 a) according to one or more of the previous claims, wherein said water wheel (5) comprises two base plates (51) parallel to each other and mutually spaced apart along said rotation axis (5a) defining a laterally open inner volume; arms (52) integrally constrained between said base plates (51) dividing the inner volume into said radial chambers (5b); and at least one shaft (53) integral with at least one plate (51).

4. Drainage system (1) for sewage (1a) according to one or more of the previous claims, wherein said electric generator (6) is a linear generator and comprises a guide (61) suitable to define a sliding axis (6a); a slider (62) suitable to slide along said guide (61) performing an oscillating translatory movement and comprising at least one magnet; and at least one conductor winding (63) inside which the slider moves (62) generating electrical energy.

5. Drainage system (1) for sewage (1 a) according to the previous claim, wherein said electric generator (6) is a linear generator with permanent magnets; and wherein said slider (62) comprises at least one permanent magnet.

6. Drainage system (1) for sewage (1 a) according to one or more of the claims 4-5, comprising a transmission member (8) comprising a rod-crank mechanism suitable to convert the rotary movement of said water wheel (5) into a reciprocating rectilinear movement of said slider (62).

7. Drainage system (1) for sewage (1 a) according to one or more of the claims 4-6, wherein said transmission member (8) comprises a crank (84) integral with said shaft (53); a connecting rod (85) connecting said crank (84) to said slider (62); a first hinge (86) between said connecting rod (85) and said crank (84) and a second hinge (87) between said crank (84) and said slider (62); and wherein said connecting rod (85) comprises a slot (84a) along which said first hinge (86) is suitable to slide by varying the rotation radius of said connecting rod (82) in relation to said shaft (53).

8. Drainage method for sewage (1a) suitable to be implemented by a drainage system (1) according to one or more of the previous claims and comprising
- a drainage step in which said sewage (1a) travels through a collection apparatus (2) and is removed from a building;
- **characterised in that** it comprises
- a filling step wherein said sewage (1a) comes out through said output cross-section (2a) and starts to fill at least one radial chamber (5b) facing said cross-section (2a);
- a rotation step in which the weight of said sewage (1a) in said radial chamber (5b) generates a rotational torque greater than the moment of inertia of said water wheel (5) and, thus causes the rotation of said water wheel (5); and
- an electricity production step in which the rotation of the water wheel (5) drives an electric generator (5) which generates electric current.

9. Drainage method of sewage (1 a) according to the previous claim, wherein, in said filling step, said sewage (1a) accumulates inside said radial chamber (5b) determining both an increase in mass of said sewage (1 a) in said radial chamber (5b) and a distancing of the barycentre of said sewage (1 a) from said rotation axis (5a).

10. Drainage method of sewage (1 a) according to one or more of the claims 8-9, comprising an adjustment step in which the transmission ratio between said water wheel (5) and said electric generator (5) is adjusted in relation to the estimated flow of sewage (1 a) of said drainage system (1).
